# EUROPÄISCHE PATENTANMELDUNG

(11) **EP 1 832 797 A2**
(43) Veröffentlichungstag der Anmeldung: **12.09.2007**
(21) Anmeldenummer: 07002487.2
(22) Anmeldetag: 06.02.2007
(51) Int. Cl.: F16L 33/24

(54) **Steckverbindungselement mit Verdrehsicherungsabschnitt**

(30) Priorität: 06.03.2006 DE 102006010142
(71) Anmelder: LuK Lamellen und Kupplungsbau Beteiligungs KG, 77815 Bühl (DE)
(72) Erfinder: Leger, Frédéric, 28140 Terminiers (FR); Berault, Rodolphe, 45140 Ingre (FR)

(57) **Zusammenfassung**

Die Erfindung betrifft ein Steckverbindungselement (1) zum Anschließen einer Hydraulikleitung, mit einem rohrförmigen Grundkörper (5), der einen Verdrehsicherungsabschnitt (20) aufweist.

Um ein Steckverbindungselement (1) zu schaffen, das auf einfache Art und Weise eine stabile drehfeste Verbindung zwischen dem Steckverbindungselement (1) und einer Hydraulikleitung ermöglicht, weist der Verdrehsicherungsabschnitt (20) ein Profil, insbesondere eine Riffelung (24,25), auf, das beziehungsweise die an der Oberfläche einen Axial- und einen Umfangsanteil hat.

## Beschreibung

Die Erfindung betrifft ein Steckverbindungselement zum Anschließen einer Hydraulikleitung, mit einem rohrförmigen Grundkörper, der einen Verdrehsicherungsabschnitt aufweist.

Die deutsche Offenlegungsschrift DE 33 45 203 A1 offenbart einen flexiblen Druckschlauch mit einem Ende, an dem eine Anschlussarmatur druckdicht und formschlüssig befestigt ist. Zur Befestigung des Druckschlauchs in einer Aufnahmebohrung der Anschlussarmatur sind auf der Oberfläche am Umfang der Anschlussarmatur gleichmäßig verteilte Sicken ausgebildet, die auf der inneren Seite der Anschlussarmatur Erhebungen bilden, die sich in die Oberfläche des Druckschlauchs mit Formschluss eindrücken.

Aufgabe der Erfindung ist es, ein Steckverbindungselement gemäß dem Oberbegriff des Anspruchs 1 zu schaffen, das auf einfache Art und Weise eine stabile drehfeste Verbindung zwischen dem Steckverbindungselement und einer Hydraulikleitung ermöglicht.

Die Aufgabe ist bei einem Steckverbindungselement zum Anschließen einer Hydraulikleitung, mit einem rohrförmigen Grundkörper, der einen Verdrehsicherungsabschnitt aufweist, dadurch gelöst, dass der Verdrehsicherungsabschnitt ein Profil, insbesondere eine Riffelung aufweist, das beziehungsweise die an der Oberfläche einen Axial- und einen Umfangsanteil hat. Durch den Axial- und den Umfangsanteil wird das Profil gewindeartig ausgebildet, so dass die Hydraulikleitung, bei der es sich vorzugsweise um einen Hartgummischlauch mit einer Gewebeverstärkung handelt, mit einer Drehbewegung auf das Steckverbindungselement aufbringbar ist. Beim Aufbringen der Hydraulikleitung schneidet das Profil in die Hydraulikleitung ein. Dadurch wird die Hydraulikleitung, insbesondere in der der Gewindeausdehnung entgegen gesetzten Richtung, verdrehgesichert.

Ein bevorzugtes Ausführungsbeispiel des Steckverbindungselements ist dadurch gekennzeichnet, dass das Profil ein selbst hemmendes Gewinde bildet. Das Gewindeprofil und die Gewindesteigung sind so gewählt, dass ein selbständiges Lösen der Hydraulikleitung von dem Steckverbindungselement verhindert wird.

Ein weiteres bevorzugtes Ausführungsbeispiel des Steckverbindungselements ist dadurch gekennzeichnet, dass das Gewinde als eingängiges Spitzgewinde ausgebildet ist. Durch einen kleinen Steigungswinkel und einen großen Flankenwinkel wird eine große Reibungskraft erreicht.

Die Aufgabe ist bei einem Steckverbindungselement zum Anschließen einer Hydraulikleitung, mit einem rohrförmigen Grundkörper, der einen Verdrehsicherungsabschnitt aufweist, alternativ oder zusätzlich auch dadurch gelöst, dass zwischen dem Verdrehsicherungsabschnitt und einem freien Ende des rohrförmigen Grundkörpers ein Bund vorgesehen ist. Vorzugsweise ist der Verdrehsicherungsabschnitt mit Verdrehsicherungselementen ausgestattet, die beim Verbinden mit einer Hydraulikleitung in diese einschneiden, wobei Späne frei werden. Der Bund verhindert, dass die Späne in den von der Hydraulikleitung begrenzten Innenraum gelangen.

Ein weiteres bevorzugtes Ausführungsbeispiel des Steckverbindungselements ist dadurch gekennzeichnet, dass sich der Bund zum freien Ende des rohrförmigen Grundkörpers hin verjüngt. Dadurch wird das Herstellen der Verbindung mit der Hydraulikleitung vereinfacht.

Ein weiteres bevorzugtes Ausführungsbeispiel des Steckverbindungselements ist dadurch gekennzeichnet, dass der Bund außen die Gestalt eines Kegelstumpfs aufweist. Diese Gestalt hat sich im Rahmen der vorliegenden Erfindung als besonders vorteilhaft erwiesen.

Ein weiteres bevorzugtes Ausführungsbeispiel des Steckverbindungselements ist dadurch gekennzeichnet, dass der rohrförmige Grundkörper zwischen dem Bund und dem Verdrehsicherungsabschnitt außen die Gestalt eines geraden Kreiszylinders aufweist. Dadurch wird eine gute Abdichtung zwischen dem Steckverbindungselement und der Hydraulikleitung gewährleistet.

Ein weiteres bevorzugtes Ausführungsbeispiel des Steckverbindungselements ist dadurch gekennzeichnet, dass der Verdrehsicherungsabschnitt einen sich zu dem Bund hin verjüngenden axialen Abschnitt aufweist. Dadurch wird das Herstellen der Verbindung mit der Hydraulikleitung vereinfacht.

Ein weiteres bevorzugtes Ausführungsbeispiel des Steckverbindungselements ist dadurch gekennzeichnet, dass der Verdrehsicherungsabschnitt eine Riffelung mit erhabenen Riffeln aufweist, die parallel zueinander verlaufen. Die nach außen erhabenen Riffeln graben sich beim Herstellen der Verbindung in die Hydraulikleitung ein.

Ein weiteres bevorzugtes Ausführungsbeispiel des Steckverbindungselements ist dadurch gekennzeichnet, dass sich die Riffeln in axialer Richtung erstrecken. Dadurch wird ein Verdrehen des Steckverbindungselements relativ zu der Hydraulikleitung, und umgekehrt, sicher verhindert.

Ein weiteres bevorzugtes Ausführungsbeispiel des Steckverbindungselements ist dadurch gekennzeichnet, dass die Riffeln schräg verlaufen. Dadurch wirkt die Riffelung beim Herstellen der Verbindung mit der Hydraulikleitung ähnlich wie ein Gewinde.

Ein weiteres bevorzugtes Ausführungsbeispiel des Steckverbindungselements ist dadurch gekennzeichnet, dass die Riffeln einen nach außen spitz zulaufenden Riffelquerschnitt aufweisen. Dadurch wird ein Einschneiden der Riffelung in die Hydraulikleitung sichergestellt.

Ein weiteres bevorzugtes Ausführungsbeispiel des Steckverbindungselements ist dadurch gekennzeichnet, dass der rohrförmige Grundkörper mit dem Verdrehsicherungsabschnitt und dem Bund einstückig aus Kunststoff, insbesondere aus Polyamid, gebildet ist. Das Steckverbindungselement ist vorzugsweise als Spritzgießteil aus Polyamid PA 12 oder PA 66 gebildet.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein Steckverbindungselement gemäß einem ersten Ausführungsbeispiel in der Draufsicht;
- Figur 2: eine perspektivische Darstellung des Steckverbindungselements aus Figur 1;
- Figur 3: ein Steckverbindungselement gemäß einem weiteren Ausführungsbeispiel in der Draufsicht;
- Figur 4: das Steckverbindungselement aus Figur 3 im Querschnitt;
- Figur 5: eine perspektivische Darstellung des Steckverbindungselements aus Figur 3;
- Figur 6: ein Winkelelement mit einem erfindungsgemäßen Steckverbindungselement;
- Figur 7: ein weiteres Winkelelement mit einem erfindungsgemäßen Steckverbindungs element und
- Figur 8: ein T-Verbindungselement mit zwei erfindungsgemäßen Steckverbindungsele menten.

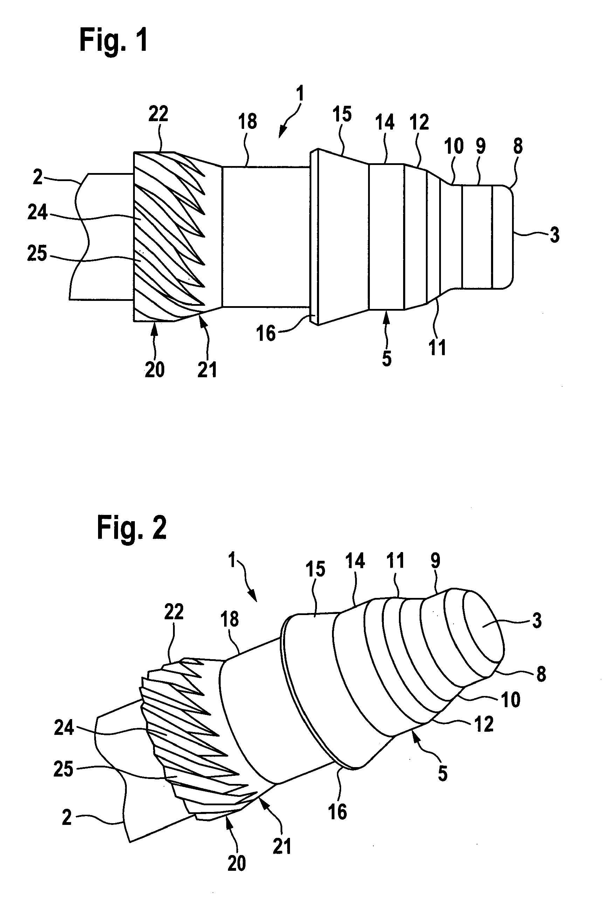

In den Figuren 1 und 2 ist ein Steckverbindungselement 1 gemäß einem ersten Ausführungsbeispiel in verschiedenen Ansichten dargestellt. Das Steckverbindungselement 1 weist ein in den Figuren 1 und 2 abgeschnitten dargestelltes Ende 2 und ein freies Ende 3 auf, auf das ein Ende einer (nicht dargestellten) Hydraulikleitung aufsteckbar ist. Bei der Hydraulikleitung handelt es sich vorzugsweise um einen druckfesten, flexiblen Kunststoffschlauch. Das Steckverbindungselement 1 umfasst einen rohrförmigen Grundkörper 5, der an dem freien Ende 3 mit einer Rundung 8 versehen ist. Auf die Rundung 8 folgt ein kreiszylindermantelförmiger Abschnitt 9, ein sich erweiternder Abschnitt 10, ein kegelstumpfartiger Abschnitt 11 und ein weiterer sich erweiternder Abschnitt 12. Die Durchmesser der Abschnitte 10 bis 12 nehmen von dem freien Ende 3 weg zu. Auf den sich erweiternden Abschnitt 12 folgt ein kreiszylindermantelförmiger Abschnitt 14.

Der kreiszylindermantelförmige Abschnitt 14 wird durch einen Bund 15 begrenzt, der die Gestalt eines Kegelstumpfs aufweist, der sich zum freien Ende 3 hin verjüngt. Auf der dem freien Ende 3 hin abgewandten Seite wird der Bund 15 von einem Absatz 16 begrenzt. Der Absatz 16 geht in einen kreiszylindermantelförmigen Abschnitt 18 über. Auf den kreiszylindermantelförmigen Abschnitt 18 folgt ein Verdrehsicherungsabschnitt 20. Der Verdrehsicherungsabschnitt 20 umfasst in axialer Richtung einen sich von dem freien Ende 3 weg erweiternden Abschnitt 21, der in einen kreiszylindermantelförmigen Abschnitt 22 übergeht.

Der Verdrehsicherungsabschnitt 20 ist mit einer Riffelung versehen, die sich über die Abschnitte 21 und 22 hin erstreckt und auch als Profil bezeichnet wird. Die Riffelung umfasst eine Vielzahl von Riffeln 24, 25, die schräg verlaufen. Die Riffeln, von denen in den Figuren 1 und 2 nur zwei mit Bezugszeichen versehen sind, sind gleichmäßig über den Umfang des Verdrehsicherungsabschnitts 20 verteilt. Wenn ein Ende eines Hydraulikleitungsschlauchs auf das freie Ende 3 des Steckverbindungselements 1 aufgeschoben wird, dann schneiden die Riffeln 24, 25 innen in den Hydraulikleitungsschlauch ein. Dabei können sich von dem Hydraulikleitungsschlauchmaterial Späne lösen. Der Bund 15 verhindert, dass keine Späne in das Innere des Hydraulikleitungsschlauchs gelangen.

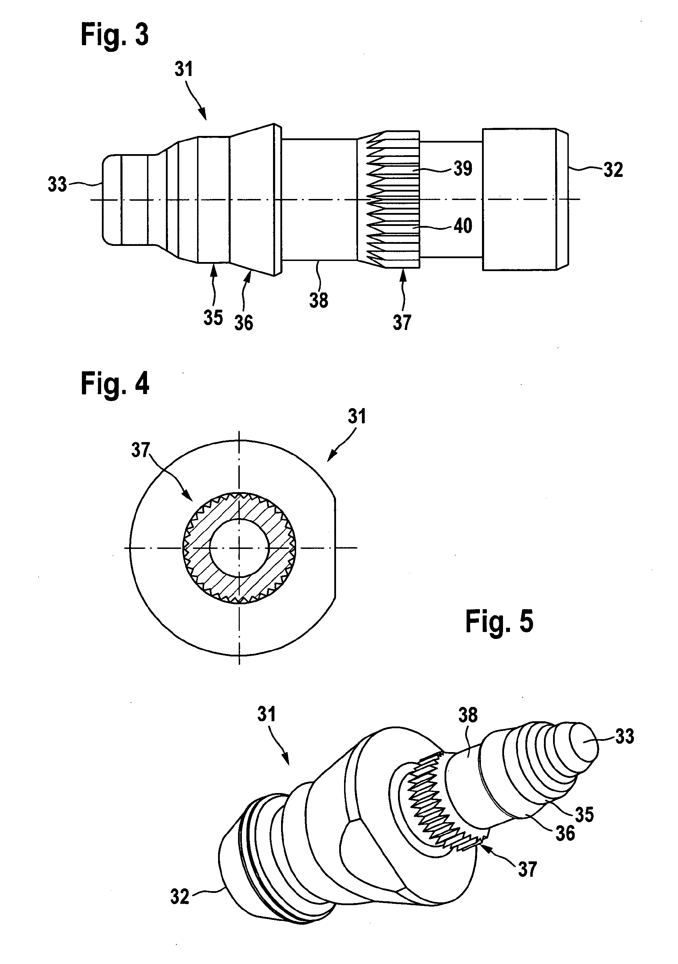

In den Figuren 3 bis 5 ist ein Steckverbindungselement 31 in verschiedenen Ansichten dargestellt. Das Steckverbindungselement 31 ähnelt dem in den Figuren 1 und 2 dargestellten Steckverbindungselement 1. Das Steckverbindungselement 31 weist ein Ende 32 und ein freies Ende 33 zum Anschließen eines (nicht dargestellten) Hydraulikleitungsschlauchs auf. Zwischen den beiden Enden 32 und 33 erstreckt sich ein rohrförmiger Grundkörper 35 mit verschiedenen Abschnitten. Der Grundkörper 35 weist bis zu einem Bund 36 die gleichen Abschnitte wie der in den Figuren 1 und 2 dargestellte Grundkörper 5 auf. Im Anschluss an den Bund 36 folgen ein kreiszylindermantelförmiger Abschnitt 38 und ein Verdrehsicherungsabschnitt 37. Der Verdrehsicherungsabschnitt 37 weist eine Riffelung mit einer Vielzahl Riffeln 39 und 40 auf. Die Riffeln 39, 40 verlaufen jedoch nicht wie bei dem vorangegangenen Ausführungsbeispiel schräg, sondern in axialer Richtung parallel zueinander.

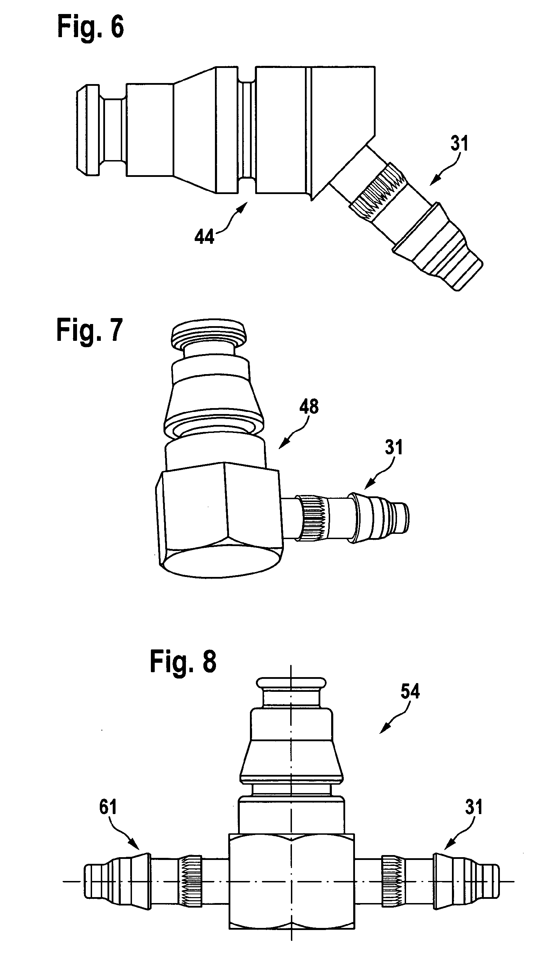

In Figur 6 ist ein Winkelverbinder 44 mit einem Steckverbindungselement 31 dargestellt, wie es in den Figuren 3 bis 5 in verschiedenen Ansichten dargestellt ist.

In Figur 7 ist ein weiterer Winkelverbinder 48 dargestellt, der ebenfalls mit einem Steckverbindungselement 31, wie es in den Figuren 3 bis 5 in verschiedenen Ansichten dargestellt ist, ausgestattet ist. Allerdings weist der Winkelverbinder 48 zwei rechtwinklig zueinander angeordnete Steckverbindungselemente auf.

In Figur 8 ist ein T-Verbindungsstück 54 dargestellt, das ein Steckverbindungselement 31, wie es in den Figuren 3 bis 5 in verschiedenen Ansichten dargestellt ist, und ein weiteres Steckverbindungselement 61 aufweist. Die beiden Steckverbindungselemente 31 und 61 erstrecken sich auf einer Achse in entgegen gesetzten Richtungen und sind ansonsten gleich ausgebildet.

### Bezugszeichenliste

- 1.: Steckverbindungselement
- 2.: Ende
- 3.: freies Ende
- 5.: rohrförmiger Grundkörper
- 8.: Rundung
- 9.: kreiszylindermantelförmiger Abschnitt
- 10.: erweiternder Abschnitt
- 11.: kegelstumpfartiger Abschnitt
- 12.: erweiternder Abschnitt
- 14.: kreiszylinderförmiger Abschnitt
- 15.: Bund
- 16.: Absatz
- 18.: kreiszylinderförmiger Abschnitt
- 20.: Verdrehsicherungsabschnitt
- 21.: erweiternder Abschnitt
- 22.: kreiszylinderförmiger Abschnitt
- 24.: Riffel
- 25.: Riffel
- 31.: Steckverbindungselement
- 32.: Ende
- 33.: freies Ende
- 35.: rohrförmiger Grundkörper
- 36.: Bund
- 37.: Verdrehsicherungsabschnitt
- 38.: kreiszylinderförmiger Abschnitt
- 39.: Riffel
- 40.: Riffel
- 44.: Winkelverbinder
- 48.: Winkelverbinder
- 54.: T-Verbindungsstück
- 61.: Steckverbindungselement

## Patentansprüche

1. Steckverbindungselement zum Anschließen einer Hydraulikleitung, mit einem rohrförmigen Grundkörper (5), der einen Verdrehsicherungsabschnitt (20) aufweist, **dadurch gekennzeichnet, dass** der Verdrehsicherungsabschnitt ein Profil (24,25), insbesondere eine Riffelung, aufweist, das beziehungsweise die an der Oberfläche einen Axial- und einen Umfangsanteil hat.

2. Steckverbindungselement nach Anspruch 1, **dadurch gekennzeichnet, dass** das Profil (24,25) ein selbst hemmendes Gewinde bildet.

3. Steckverbindungselement nach Anspruch 2, **dadurch gekennzeichnet, dass** das Gewinde als eingängiges Spitzgewinde ausgebildet ist.

4. Steckverbindungselement zum Anschließen einer Hydraulikleitung, mit einem rohrförmigen Grundkörper (5;35), der einen Verdrehsicherungsabschnitt (20;37) aufweist, insbesondere nach einem der vorhergehenden Ansprüche, **dadurch gekennzeichnet, dass** zwischen dem Verdrehsicherungsabschnitt (20;37) und einem freien Ende (3;33) des rohrförmigen Grundkörpers (5;35) ein Bund (15;36) vorgesehen ist.

5. Steckverbindungselement nach Anspruch 4, **dadurch gekennzeichnet, dass** sich der Bund (15;36) zum freien Ende (3;33) des rohrförmigen Grundkörpers (5;35) hin verjüngt.

6. Steckverbindungselement nach Anspruch 5, **dadurch gekennzeichnet, dass** der Bund (15;36) außen die Gestalt eines Kegelstumpfs aufweist.

7. Steckverbindungselement nach einem der Ansprüche 4 bis 6, **dadurch gekennzeichnet, dass** der rohrförmige Grundkörper (5;35) zwischen dem Bund (15;36) und dem Verdrehsicherungsabschnitt (20;37) außen die Gestalt eines geraden Kreiszylinders (18;38) aufweist.

8. Steckverbindungselement nach einem der Ansprüche 4 bis 7, **dadurch gekennzeichnet, dass** der Verdrehsicherungsabschnitt (20;37) einen sich zu dem Bund hin verjüngenden axialen Abschnitt (21) aufweist.

9. Steckverbindungselement nach einem der Ansprüche 4 bis 8, **dadurch gekennzeichnet, dass** der Verdrehsicherungsabschnitt (20;37) eine Riffelung mit erhabenen Riffeln (24,25;39,40) aufweist, die parallel zueinander verlaufen.

10. Steckverbindungselement nach Anspruch 9, **dadurch gekennzeichnet, dass** sich die Riffeln (39;40) in axialer Richtung erstrecken.

11. Steckverbindungselement nach Anspruch 9, **dadurch gekennzeichnet, dass** die Riffeln (24,25) schräg verlaufen.

12. Steckverbindungselement nach einem der Ansprüche 8 bis 11, **dadurch gekennzeichnet, dass** die Riffeln (24,25;39,40) einen nach außen spitz zulaufenden Riffelquerschnitt aufweisen.

13. Steckverbindungselement nach einem der Ansprüche 4 bis 12, **dadurch gekennzeichnet, dass** der rohrförmige Grundkörper (5;35) mit dem Verdrehsicherungsabschnitt (20;37) und dem Bund (15;36) einstückig aus Kunststoff, insbesondere Polyamid, gebildet ist.
